# EUROPÄISCHE PATENTANMELDUNG

(11) **EP 4 300 413 A1**
(43) Veröffentlichungstag der Anmeldung: **03.01.2024**
(21) Anmeldenummer: 22181230.8
(22) Anmeldetag: 27.06.2022
(51) Int. Cl.: G06T 7/00, G06T 7/73

(54) **RECHNERSYSTEM ZUR POSITIONSBESTIMMUNG EINES ANKERS UND VERFAHREN**

(71) Anmelder: Hilti Aktiengesellschaft, 9494 Schaan (LI)
(72) Erfinder: Pfarr, Lukas, 6800 Feldkirch (AT); Engel, Mareike, Winchester, 01890 (US); Shaked, Alona, 9487 Gamprin-Bendern (LI)
(74) Vertreter: Hilti Aktiengesellschaft Corporate Intellectual Property

(57) **Zusammenfassung**

Die Erfindung betrifft ein Rechnersystem (26) zur Positionsbestimmung einer Ankerposition relativ zu einem Baustellenobjekt (12). Mit Hilfe von Programmcode (32) ist das Rechnersystem (26) eingerichtet ist, wenigstens einen Typ eines ersten Ankers (16) zu identifizieren, und mit Hilfe einer Kamera (36) wenigstens einen Abstand (D1R) zwischen einer ersten Ankerposition des ersten Ankers (16) auf einem Baustellenobjekt (12) und / oder für den ersten Anker (16) und einer Position eines zweiten Ankers (18) auf dem Baustellenobjekt (12), für einen zweiten Anker (18) auf dem Baustellenobjekts (12) und / oder zu einem Rand (24) des Baustellenobjekts (12) zu bestimmen, und mit Hilfe einer Ausgabeeinheit (28) ein Signal (56) auszugeben und / oder in einem Speicher (30) ein Signal (56) abzuspeichern, wobei das Signal (56) indikativ dafür ist, ob der Abstand (D1R) einem definierten Sollabstand (D1RS) mindestens entspricht. Des Weiteren betrifft die Erfindung ein Verfahren (1000). Die Erfindung erleichtert ein ordnungsgemäßes Setzen des ersten Ankers (16) sowie eine Prüfung, ob der erste Anker (16) ordnungsgemäß gesetzt ist.

## Beschreibung

Die Erfindung betrifft eine Vorrichtung zur Unterstützung des Setzens eines Ankers, beispielsweise einer Schraube oder eines Nagels.

Aus Sicherheitsgründen müssen gesetzte Anker bestimmten Mindestanforderungen genügen.

Beispielsweise muss der gesetzte Anker bestimmte Mindestabstände zu anderen, benachbarten Ankern und / oder zu Rändern von Baustellenobjekten, in die der Anker gesetzt werden soll, einhalten. Anderenfalls drohen Sicherheitsrisiken, beispielsweise dadurch, dass der gesetzte Anker nicht mit hinreichender Sicherheit die für eine bestimmte Anwendung erforderlichen Haltekräfte entfalten kann.

Bislang ist versucht worden, die Einhaltung dieser Mindestanforderungen manuell, insbesondere durch Abmessen mit einem Längenmessgerät, zu überprüfen.

Dies gestaltet sich jedoch in üblichen Baustellensituationen, beispielsweise bei Überkopfarbeiten, bei Arbeiten in großen Höhen oder dergleichen, oftmals als sehr schwierig.

Eine besondere Schwierigkeit besteht auch darin, dass Höhenunterschiede zwischen Messpunkten zu Messfehlern aufgrund einer zum Längenmessgerät nicht vollständig senkrechten Betrachtung und der damit verbundenen Parallaxe führen.

Zur Überprüfung dieser Mindestanforderung sind jedoch in der Regel Messgenauigkeiten von unter einem Zentimeter, insbesondere von weniger als 0,5 cm, erforderlich.

Aufgabe der vorliegenden Erfindung ist es daher, eine Vorrichtung anzubieten, die ein sicheres Setzen eines Ankers in ein Baustellenobjekt ermöglicht. Wünschenswert ist ferner, wenn mithilfe der Vorrichtung auf einfache Weise überprüft werden kann, ob ein bereits gesetzter Anker ordnungsgemäß gesetzt ist.

Gelöst wird die Aufgabe durch ein **Rechnersystem** zur Positionsbestimmung einer Ankerposition relativ zu einem Baustellenobjekt, beispielsweise einem Betonelement, umfassend wenigstens eine Kamera, wenigstens eine Ausgabeeinheit, wenigstens einen Speicher, und wenigstens einen Mikroprozessor, wobei in dem Speicher Programmcode zur Ausführung auf dem Mikroprozessor abgelegt ist, wobei der Programmcode eingerichtet ist, wenigstens einen Typ eines ersten Ankers zu identifizieren, und mit Hilfe der Kamera wenigstens einen Abstand zwischen einer ersten Ankerposition des ersten Ankers auf einem Baustellenobjekt und / oder für den ersten Anker und einer Position eines zweiten Ankers auf dem Baustellenobjekt, für einen zweiten Anker auf dem Baustellenobjekts und / oder zu einem Rand des Baustellenobjekts zu bestimmen, und mit Hilfe der Ausgabeeinheit ein Signal auszugeben und / oder im Speicher ein Signal abzuspeichern, wobei das Signal indikativ dafür ist, ob der Abstand einem definierten Sollabstand mindestens entspricht.

Somit kann das Rechnersystem den Typ des Ankers identifizieren und auf Basis des Typs des Ankers mit diesem Typ verknüpfte Daten, insbesondere Daten bezüglich der Geometrie des Ankers, nutzen. Mit der Kamera können ein oder mehrere Aufnahmen aufgenommen werden. Der Programmcode kann eingerichtet sein, die ein oder mehreren Aufnahmen auszuwerten.

Insbesondere kann der Programmcode eingerichtet sein, mittels Bildverarbeitung den Abstand zu bestimmen. Dabei kann die Genauigkeit der Bildverarbeitung, insbesondere der Abstandsbestimmung, verbessert werden, indem die mit dem Typ des Ankers verknüpften Daten bei der Bildverarbeitung berücksichtigt werden. Handelt es sich bei dem Anker beispielsweise um einen Schraubanker mit einem Kopf, so kann ein bekannter Durchmesser des Kopfes zur Ermittlung eines Abbildungsmaßstabes in den Aufnahmen dienen.

Werden mehrere Aufnahmen, insbesondere aus verschiedenen Perspektiven aufgenommen, so kann der entstehende Parallaxenversatz genutzt werden, um Tiefeninformationen aus den Aufnahmen zu generieren.

Wird wenigstens eine Bewegtbildsequenz aufgenommen, so kann aus der Bewegtbildsequenz, insbesondere aus sich mit relativ zum Gesamtbild unterschiedlichen Geschwindigkeiten bewegenden Teilen der Aufnahmen auf unterschiedliche Tiefen der jeweiligen Bildinhalte geschlossen werden.

Alternativ oder ergänzend ist auch denkbar, dass die Kamera einen Tiefensensor aufweist. Die Kamera kann beispielsweise einen oder mehrere Flugzeit-basierte Tiefensensoren aufweisen. Dann können für die Auswertung notwendige Tiefeninformationen auch unmittelbar aus den Aufnahmen gewonnen werden.

Tiefeninformationen können die hier beschriebene Bildverarbeitung vereinfachen und / oder in ihrer Genauigkeit verbessern. Denkbar ist jedoch auch, dass die Kamera eingerichtet ist, lediglich zweidimensionale Aufnahme aufzunehmen.

Die Kamera kann eine Farbbildkamera, eine Schwarz-Weiß-Kamera und / oder eine Ereigniskamera sein und / oder aufweisen.

Der bestimmte Abstand kann auf der Ausgabeeinheit als Signal ausgegeben werden. Ein Nutzer des Rechnersystems kann dadurch informiert werden, ob der gesetzte Anker ordnungsgemäß gesetzt ist oder nicht.

Ist der erste Anker nicht ordnungsgemäß gesetzt, kann vorgesehen sein, dass der erste Anker nachträglich in seinem Sitz korrigiert und / oder entfernt wird. Im Falle der Entfernung kann vorgesehen sein, anstelle des ersten Ankers einen Austauschanker an der ersten Ankerposition zu setzen. Dann kann der Austauschanker auch auf seinen ordnungsgemäßen Sitz hin geprüft werden.

Alternativ oder ergänzend ist auch denkbar, das als Ankerposition eine Position bestimmt wird, an die der Anker erst noch gesetzt werden soll. Die Ankerposition kann beispielsweise der Position eines, insbesondere noch zu erstellenden, Bohrlochs entsprechen.

Dann kann der Benutzer informiert werden, ob die Position des Bohrlochs beziehungsweise die Ankerposition ein korrektes Setzen des Ankers überhaupt ermöglicht oder ob beispielsweise ein weiteres Bohrloch an einer anderen, besser geeigneten, Position zu bohren ist.

Mit anderen Worten kann das Rechnersystem zur Qualitätssicherung eines bereits gesetzten Ankers und / oder zur raschen Findung geeigneter Ankerpositionen verwendet werden.

Der erste Anker und / oder weitere Anker können beispielsweise Schraubanker, Bolzenanker, Schlaganker, insbesondere Nägel, oder dergleichen sein. Sie können zum Setzen in bestimmte Materialien, insbesondere Gesteine, beispielsweise Beton, Metalle und / oder Holz, eingerichtet sein. Beispielsweise kann der erste Anker ein Betonschraubanker sein. Vorzugsweise kann demgemäß dann auch das Baustellenobjekt ein Beton-aufweisendes Objekt, beispielsweise ein Stahlbeton-Objekt, sein und / oder umfassen.

Das Rechnersystem kann tragbar sein. Dazu kann es ein Gewicht von weniger als einem Kilogramm, beispielsweise von weniger als 0,5 Kilogramm, aufweisen. Es kann beispielsweise als tragbares Telekommunikationsgerät, beispielsweise in Form eines sogenannten Smartphones, ausgebildet sein.

Die Ausgabeeinheit kann eine Displayeinheit umfassen. Sie kann auch eine Eingabeeinheit umfassen. Beispielsweise kann die Ausgabeeinheit einen Touchscreen umfassen.

Das Rechnersystem kann ein mehrteiliges Rechnersystem, insbesondere mit einer lokalen und einer entfernten Rechnereinheit, sein. Beispielsweise kann es ein Cloud-basiertes Rechnersystem sein und / oder umfassen.

Der Mikroprozessor kann ein oder mehrere Recheneinheiten aufweisen. Denkbar ist beispielsweise, dass eine der Recheneinheiten eine linear arbeitende Recheneinheit ist. Wenigstens eine weitere Recheneinheit kann eine zur Parallelverarbeitung ausgebildete Recheneinheit sein. Eine solche kann beispielsweise ein Grafikprozessor sein oder als Teil eines Grafikprozessors ausgebildet sein.

Der Mikroprozessor und / oder der Programmcode können ausgebildet sein, wenigstens einen Maschinenlerner aufzuweisen und / oder auszubilden. Der Maschinenlerner kann ein trainierbares, neuronales Netz aufweisen. Das neuronale Netz kann Konvolutions-basiert sein.

Die Identifikation des Typs des ersten Ankers kann durch Erkennen eines Datenmatrixcodes, beispielsweise eines QR-Codes, erfolgen. Dieser kann vorzugsweise auf dem ersten Anker, oder zumindest auf einer Verpackung, aus der der erste Anker entnommen ist, angeordnet und / oder ausgebildet sein. Alternativ oder ergänzend ist auch denkbar, dass ein Benutzer des Rechnersystems den Typ des ersten Ankers manuell in das Rechnersystem eingibt, um den Typ auf diese Weise zu identifizieren.

Denkbar ist auch, dass der Programmcode eingerichtet ist, den Typ des ersten Ankers anhand wenigstens eines Strukturmerkmals des Ankers zu identifizieren. Das Strukturmerkmal kann beispielsweise auf die Geometrie des Ankers bezogen sein. Es kann sich beispielsweise um eine Abmessung des ersten Ankers handeln. Gerade bei Ankern, beispielsweise Schraubankern, kann eine eindeutige Typzuordnung oftmals nicht allein auf Basis solcher geometrischer Merkmale erfolgen. Beispielsweise weisen viele Typen verschiedener Anker, insbesondere Anker mit verschiedenen Gesamtlängen, dieselben Kopfdurchmesser auf, da die Kopfform und der Kopfdurchmesser bestimmten Standardisierungen genügen sollen. Daher ist alternativ oder ergänzend denkbar, dass der Programmcode eingerichtet ist, wenigstens eines der aufgenommenen Bilder bezüglich des Vorhandenseins eines Schriftzuges, beispielsweise einer Typbezeichnung, auszuwerten. Denkbar ist auch, dass der Typ des ersten Ankers anhand von Oberflächenmerkmalen identifizierbar ist, die sich aufgrund einer spezifischen Herstellungsmethode des ersten Ankers aus dieser in möglichst einzigartiger und für den Typ des ersten Angriffs möglichst spezifischer Weise ergeben. Solche Oberflächenmerkmale können beispielsweise bestimmte Ritzspuren und / oder Gravuren, beispielsweise im Kopf des ersten Ankers, sein und / oder umfassen. Dann ist denkbar, dass der Programmcode eingerichtet ist, die wenigstens eine Aufnahme hinsichtlich des Vorhandenseins solcher spezifischer Oberflächenmerkmale auszuwerten.

Die Genauigkeit der Messung mittels einer solchen Bildverarbeitung kann weiter gesteigert werden, indem der Programmcode eingerichtet ist, zur Kalibrierung von Längenmessungen mit dem Typ des jeweiligen Ankers verknüpfte Daten zu verwenden. Ist beispielsweise der Kopfdurchmesser des ersten Ankers bekannt, so kann nach Identifikation des Kopfes des ersten Ankers in einer von der Kamera aufgenommenen Aufnahme diese Länge zur Kalibrierung verwendet oder zumindest zur Kalibrierung hinzugezogen werden.

Denkbar ist, dass der Programmcode eingerichtet ist, den Sollabstand in Abhängigkeit vom Typ des ersten Ankers und / oder vom Typ des zweiten Ankers festzulegen. Dazu kann auf mit dem Typ des ersten Ankers verbundene Daten zurückgegriffen werden. Der Sollabstand kann beispielsweise einem Abstand des ersten Ankers zu einem zweiten Anker entsprechend. Alternativ oder ergänzend kann der Sollabstand einem Abstand des ersten Ankers zu einem Rand des Baustellenobjekts entsprechen.

Das Rechnersystem kann ein Kommunikationsmodul aufweisen zur Kommunikation mit einem entfernten Rechnersystem. Der Programmcode kann eingerichtet sein, Daten, insbesondere bezüglich des Typs des ersten Ankers, von dem entfernten Rechnersystem über das Kommunikationsmodul abzurufen. Insbesondere kann der Programmcode eingerichtet sein, den Sollabstand abzurufen.

Denkbar ist auch, dass im Speicher Planungsdaten abgelegt sind. Die Planungsdaten können Daten wie beispielsweise den Sollabstand umfassen. Die Daten können auch Materialeigenschaften, Geometrien, insbesondere Sollgeometrien, insbesondere des Baustellenobjekts, eines Zwischenobjekts und / oder des ersten und / oder weiterer Anker umfassen. Der Programmcode kann eingerichtet sein, die Planungsdaten mit Hilfe des Kommunikationsmoduls vom entfernten Rechnersystem in den Speicher zu laden.

Der Programmcode kann auch eingerichtet sein, wenigstens eine Materialeigenschaft des Baustellenobjekts zu bestimmen. Abhängig von der bestimmten Materialeigenschaft, beispielsweise einer Materialart, dem Vorliegen von Rissen und / oder anderen Beschädigungen insbesondere des Baustellenobjekts, kann dann der Sollabstand angepasst und / oder festgelegt werden.

Oftmals werden Anker verwendet, um weitere Objekte am Baustellenobjekt zu befestigen. Setzeigenschaften des ersten Ankers können dann von der Art des oder der weiteren Objekte abhängen. Beispielsweise kann von der Dicke eines zu befestigenden Objekts eine maximal mögliche Setztiefe des ersten Ankers abhängen. Daher ist es günstig, wenn der Programmcode eingerichtet ist, wenigstens ein am Anker und am Baustellenobjekt anzuordnendes und / oder angeordnetes Zwischenobjekt zu identifizieren. Das Zwischenobjekt kann beispielsweis eine Unterlegscheibe, eine Grundplatte und / oder dergleichen sein.

Der Programmcode kann eingerichtet sein, mit Hilfe der Kamera eine Setztiefe des ersten Ankers im Baustellenobjekt zu bestimmen.

Beispielsweise kann er eingerichtet sein, mittels Bildverarbeitung einer Aufnahme der Kamera die Setztiefe zu bestimmen. Dazu kann ein Überstand des ersten Ankers vom Baustellenobjekt bestimmt werden. Ist die Gesamtlänge des ersten Ankers bekannt, kann aus der Gesamtlänge abzüglich des Überstandes auf diese Setztiefe geschlossen werden.

Das Rechnersystem kann zur Qualitätssicherung eingesetzt werden. Daher ist es günstig, wenn der Programmcode eingerichtet ist, den Abstand zu bestimmen, wenn der erste Anker bereits gesetzt ist. In diesem Fall ist also der Programmcode eingerichtet, einen bereits gesetzten Anker zu identifizieren und wenigstens eine Mindestanforderung, beispielsweise den Sollabstand, beispielsweise des ersten Ankers vom Rand des Baustellenobjekts, zu überprüfen.

Alternativ oder ergänzend kann der Programmcode eingerichtet sein, den Abstand ausgehend von der ersten Ankerposition zu bestimmen, wenn der erste Anker nicht gesetzt ist. Insbesondere kann dann der Programmcode eingerichtet sein, mithilfe von Bildverarbeitung wenigstens einer Aufnahme der Kamera beispielsweise ein Bohrloch oder eine vergleichbare Ankerposition, an der der erste Anker gesetzt werden soll, zu identifizieren. Denkbar ist insbesondere, dass ein Benutzer des Rechnersystems eine Ankerposition mit einem Zeigegerät, beispielsweise einem Laserpointer, auf dem Baustellenobjekt markiert. Eine derart markierte Ankerposition kann dann vom Programmcode beziehungsweise vom Rechnersystem identifiziert und analog zu dem oben Beschriebenen verarbeitet werden.

Dies ermöglicht es, das Rechnersystem zur schnellen Findung geeigneter Ankerpositionen einzusetzen. Das Rechnersystem kann somit als Montagehilfe verwendbar sein.

Weiter ist denkbar, dass der Programmcode eingerichtet ist, einen Oberflächenverlauf des Baustellenobjekts und / oder des Zwischenobjekts unter Verwendung wenigstens einer das Baustellenobjekt und / oder das Zwischenobjekt charakterisierenden Eingabe eines Benutzers des Rechnersystems zu bestimmen. Insbesondere kann der Programmcode weiter eingerichtet sein, eine Eingabe von wenigstens drei Positionen, insbesondere durch grafische Darstellung und Auswahl mit Hilfe der Ausgabeeinheit, insbesondere wenn die Ausgabeeinheit auch eine Eingabeeinheit, beispielsweise in Form eines Touchscreens, umfasst, abzufragen.

Der Programmcode kann ferner eingerichtet sein, wenigstens eine Aufnahme des Baustellenobjekts einschließlich des ersten Ankers, der ersten Ankerposition, des zweiten Ankers und / oder der zweiten Ankerposition mithilfe der Kamera aufzunehmen.

Die Aufnahme kann an der Ausgabeeinheit, insbesondere graphisch, dargestellt werden.

Weist die Ausgabeeinheit einen Touchscreen auf, so kann der Programmcode sodann eingerichtet sein, beispielsweise wenigstens drei Eingabepositionen vom Benutzer abzufragen.

Die Eingabepositionen können vom Benutzer beispielsweise durch Antippen der entsprechenden Positionen auf dem Touchscreen erfolgen.

Unter der Voraussetzung, dass die drei Eingabepositionen zu einem selben Element gehören, lässt sich somit die Genauigkeit, mit der das Baustellenobjekt und / oder das Zwischenobjekt identifiziert werden können weiter verbessern.

Denkbar ist auch, dass sich durch derartige Eingabepositionen die Erkennung von Rändern des Baustellenobjekts und / oder des Zwischenobjekts verbessern lassen.

Die Erfindung betrifft auch eine **Handwerkzeugmaschine** mit einem Rechnersystem der vorangehend und / oder nachfolgend beschriebenen Art.

Die Handwerkzeugmaschine kann ein Setzgerät sein. Beispielsweise kann sie ein Bolzensetzgerät sein. Denkbar ist alternativ auch, dass die Handwerkzeugmaschine ein Schraubensetzgerät, beispielsweise ein Akkuschrauber und / oder ein Akkuschlagschrauber ist.

Sie kann eingerichtet sein, den korrekten Sitz, insbesondere eine korrekte Position, eines gesetzten Befestigungselements, beispielsweise einer Schraube oder eines Nagels, zu verifizieren. Somit kann die Handwerkzeugmaschine insbesondere zur Qualitätssicherung des gesetzten Befestigungselements eingerichtet sein.

Denkbar ist alternativ oder ergänzend auch, dass die Handwerkzeugmaschine eine Bohrmaschine umfasst. Die Bohrmaschine kann ein Bohrhammer sein. Sie kann insbesondere zur Bearbeitung von Gestein, beispielsweise Beton, eingerichtet sein. Somit kann die Handwerkzeugmaschine eingerichtet sein, eine Ankerposition, insbesondere die Position eines Bohrlochs, zu prüfen und / oder einem Benutzer der Handwerkzeugmaschine zu signalisieren, ob eine geplante Position gegebenen Anforderungen entspricht oder entsprechen würde.

Mithin kann die Handwerkzeugmaschine eingerichtet sein, vor Beginn des Bohrens eines Bohrlochs im Falle der Bohrmaschine oder vor Beginn des Setzens eines Befestigungselements im Falle des Setzgeräts dem Benutzer ein Freigabesignal zu signalisieren, wenn die Handwerkzeugmaschine, insbesondere eine Werkzeugspitze eines an der Handwerkzeugmaschine angeordneten Werkzeugs, eine den Anforderungen entsprechende Position anpeilt und / oder ein Sperrsignal zu signalisieren, wenn die Handwerkzeugmaschine, insbesondere die Werkzeugspitze, eine den Anforderungen nicht entsprechende Position anpeilt. Anstelle oder ergänzend zur Signalisierung des Freigabesignals und / oder des Sperrsignals kann auch ein Arbeitsvorgang, beispielsweise ein Bohren eines Bohrlochs oder ein Setzen des Befestigungselements, startbar beziehungsweise gesperrt sein.

Durch die Anordnung des Rechnersystems an der Handwerkzeugmaschine kann der Benutzer der Handwerkzeugmaschine eine Ankerposition bzw. eine Position eines Ankers prüfen, ohne die Handwerkzeugmaschine ablegen zu müssen. Der Benutzer braucht somit beispielsweise nicht zunächst die Handwerkzeugmaschine ablegen, ein Smartphone oder dergleichen mit dem Rechnersystem greifen, das Rechnersystem verwenden und dann erneut wieder zurück zur Handwerkzeugmaschine wechseln. Somit lassen sich Arbeitsabläufe erheblich vereinfachen und beschleunigen. Auch lässt sich durch eine solche Vereinfachung und Beschleunigung die Bereitschaft des Benutzers verbessern, beispielsweise Dokumentationsaufgaben zur Dokumentation beispielsweise eines korrekten Sitzes eines gesetzten Ankers, auch tatsächlich auszuführen.

Das Rechnersystem kann an einer Befestigungsstelle der Handwerkzeugmaschine lösbar angeordnet sein. Denkbar ist insbesondere, dass die Befestigungsstelle einer Batterieschnittstelle entspricht, insbesondere wenn die Handwerkzeugmaschine kabellos betreibbar ist. Dann lässt sich das Rechnersystem an der Batterieschnittstelle befestigen.

Das Rechnersystem kann dazu auch eine Batterieschnittstelle aufweisen.

In den Rahmen der Erfindung fällt des Weiteren ein **Verfahren zur Unterstützung des Setzens** eines ersten Ankers in ein Baustellenobjekt und / oder zur Qualitätskontrolle eines in ein Baustellenobjekt gesetzten ersten Ankers, wobei mit einem Rechnersystem der vorangehend und / oder nachfolgend beschriebenen Art mit Hilfe einer Kamera des Rechnersystems wenigstens ein Abstand zwischen einer ersten Ankerposition des ersten Ankers auf einem Baustellenobjekt und / oder für den ersten Anker und einer Position eines zweiten Ankers auf dem Baustellenobjekt, für einen zweiten Anker auf dem Baustellenobjekts und / oder zu einem Rand des Baustellenobjekts bestimmt wird, und wobei der bestimmte Abstand mit einem Sollabstand verglichen wird.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: eine Baustellensituation mit einem Baustellenobjekt und einem Rechnersystem;
- Fig. 2: einen Querschnitt durch das Baustellenobjekt mit einem darin gesetzten, ersten Anker;
- Fig. 3: einen Maschinenlerner;
- Fig. 4: ein Verfahren;
- Fig. 5: einen Ausschnitt eines Bildschirmfotos einer Ergebnisausgabe des Rechnersystems und
- Fig. 6: eine Handwerkzeugmaschine mit einem Rechnersystem.

In der nachfolgenden Beschreibung der Figuren werden zur Erleichterung des Verständnisses der Erfindung für gleiche oder sich funktional entsprechende Elemente jeweils die gleichen Bezugszeichen verwendet.

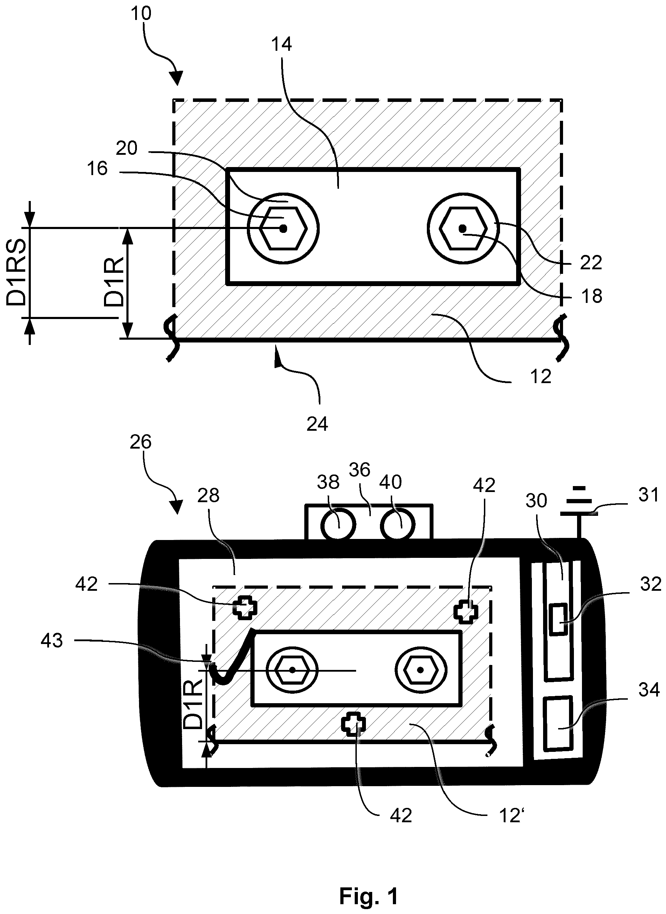

**Fig. 1** zeigt eine Baustellensituation **10**. Es kann sich dabei beispielsweise um eine Hochbau-Baustelle handeln. Zu erkennen ist insbesondere ein Baustellenobjekt **12,** in diesem Fall ein Betonelement. Das Betonelement kann beispielsweise einer Bodenplatte eines Fußbodens oder einer Decke entsprechen. An dem Baustellenobjekt 12 ist eine Grundplatte **14** mit Hilfe eines ersten Ankers **16** und eines zweiten Ankers **18** montiert. Der erste Anker **16** und der zweite Anker 18 sind jeweils über eine erste Unterlegscheibe **20** bzw. eine zweite Unterlegscheibe **22** in das Baustellenobjekt 12 und durch die Grundplatte 14 hindurch gesetzt.

Der erste Anker 16 und der zweite Anker 18 sind Betonschraubanker.

Das Baustellenobjekt 12 weist einen Rand **24** auf.

Mithilfe eines Rechnersystems **26** soll nun geprüft werden, ob der erste Anker 16 ordnungsgemäß gesetzt ist. Beispielhaft soll insbesondere geprüft werden, ob ein Randabstand **D1R** des ersten Ankers 16 vom Rand 24 wenigstens einen Sollabstand **D1RS** erreicht.

Das Rechnersystem 26 weist eine Ausgabeeinheit **28** auf. Die Ausgabeeinheit 28 weist einen Touchscreen auf. Auf ihr können somit grafische Informationen ausgegeben werden; auch können durch Antippen Positionen oder dergleichen eingegeben werden.

Positionen können von einem Benutzer zweidimensional mittels Antippen des Touchscreens an einer zu der einzugebenden Position korrespondierenden Stelle eingegeben werden. Alternativ oder ergänzend ist denkbar, dass der Benutzer zur Eingabe der Position auf eine entsprechende Stelle im Raum zeigt und / oder eine der Position entsprechende Geste ausführt. Die angezeigte Position und / oder die Geste können dann aufgenommen und ausgewertet werden, um die Position zu bestimmen.

Weiter weist das Rechnersystem 26 einen Speicher **30** auf. Im Speicher 30 ist ein Programmcode **32** abgelegt. Der Programmcode 32 kann auf einem Mikroprozessor **34** des Rechnersystems 26 ausgeführt werden.

Das Rechnersystem 26 weist ein Kommunikationsmodul **31** auf, das zum Aufbau einer Datenverbindung zu einem entfernten Rechnersystem eingerichtet ist.

Ferner weist das Rechnersystem 26 eine Kamera **36** auf. die Kamera 36 ist als stereoskopische Kamera ausgebildet. Dazu weist sie zwei Aufnahmeeinheiten **38**, **40** auf. Die Aufnahmeeinheiten 38, 40 sind voneinander beabstandet am Rechnersystem 26 angeordnet.

Sie können somit Aufnahmen aus unterschiedlichen Perspektiven aufnehmen. Dabei ist die Kamera 36 insgesamt eingerichtet, aus Einzelaufnahmen der Aufnahmeeinheiten 38, 40 Aufnahmen mit Tiefeninformationen, also dreidimensionale Aufnahmen einer Umgebung aufzunehmen.

Die Aufnahmeeinheiten 38, 40 können jeweils zur Aufnahme von Farbaufnahmen eingerichtet sein.

Beispielhaft ist in Fig. 1 dargestellt, das die Ausgabeeinheit 28 ein Abbild **12**' des Baustellenobjekts 12 zeigt. Ferner sind drei Eingabepositionen **42** zu erkennen. Diese drei Eingabepositionen 42 entsprechen Eingaben von Positionen eines Benutzers (in Fig. 1 nicht dargestellt), die der Benutzer dem Baustellenobjekt 12 bzw. dessen Abbild 12' zuordnet. Eine Eingabe einer Eingabeposition 42 kann durch Berühren der als Touchscreen ausgebildeten Ausgabeeinheit 28 durch den Benutzer an der entsprechenden Stelle erfolgen.

Das Rechnersystem 26, insbesondere der Programmcode 32 in Verbindung mit dem Mikroprozessor 34, ist eingerichtet, von der Kamera 36 aufgenommene Aufnahmen, insbesondere Bewegtbildsequenzen, auszuwerten. Beispielsweise werden Typen des ersten Ankers 16 und / oder des zweiten Ankers 18 identifiziert und der Verlauf des Randes 24 bestimmt. Des Weiteren werden die zu dem ersten Anker 16, dem zweiten Anker 18 und dem Rand 24 zugehörigen Positionen bestimmt. Alternativ oder ergänzend kann auch wenigstens ein Typ, beispielsweise der Typ des ersten Ankers 16, manuell eingebbar sein. Denkbar ist auch, dass ein den Typ bestimmender Barcode, Datenmatrixcode oder dergleichen zur Bestimmung eingescannt werden kann.

Anhand des bestimmten und / oder eingegebenen Typs des ersten Ankers 16 wird über die Kommunikationseinheit 31 ein Wert des Sollabstandes D1RS für diesen Typ ermittelt.

Aus den bestimmten Positionen beispielsweise des ersten Ankers 16 und des Verlaufes des Randes 24 wird sodann der Abstand D1R bestimmt.

Der Abstand D1R wird mit dem Wert des Sollabstandes D1RS verglichen. Im in Fig. 1 dargestellten Fall ist der Sollabstand D1RS eingehalten, sodass das Rechnersystem 26 ein positives Prüfsignal **43** auf der Ausgabeeinheit 28 ausgibt.

Es versteht sich, dass auch andere Mindestanforderungen als der Sollabstand D1RS, beispielsweise auch Mindestanforderungen an den zweiten Anker 18, mit dem Rechnersystem 26 in analoger Weise geprüft werden können.

Wie vorangehend erläutert, ist der Programmcode 32 unter anderem eingerichtet, Aufnahmen der Kamera 36 mittels Bildverarbeitung auszuwerten.

Zur Durchführung dieser Bildverarbeitungen ist durch den Programmcode 32 in Verbindung mit dem Speicher 30 und dem Mikroprozessor 34 wenigstens ein Maschinenlerner ausgebildet.

Ein Beispiel einer anderen Mindestanforderung ist eine Mindest-Setztiefe, mit der der erste Anker 16 in das Baustellenobjekt 12 hineinragen muss.

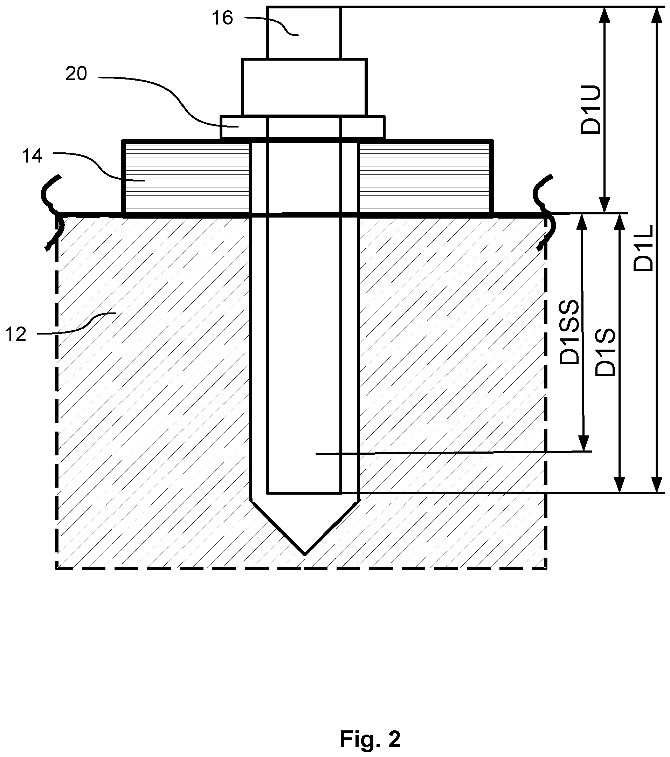

Dazu zeigt **Fig. 2** zeigt eine teilgeschnittene Ansicht durch das Baustellenobjekt 12 mit dem ersten Anker 16 und der dazwischenliegenden Grundplatte 14 sowie der ersten Unterlegscheibe 20.

Der erste Anker 16 ragt mit einem Überstand **D1U** aus dem Baustellenobjekt 12 heraus. Insgesamt weist der erste Anker 16 entsprechend seinem Typ eine Länge **D1L** auf. Er ragt somit mit einer Setztiefe **D1S** entsprechend der Differenz aus D1L und D1U in das Baustellenobjekt 12 hinein.

Zur Ermittlung der Setztiefe D1S ist daher der Programmcode 32 (Fig. 1) eingerichtet, den Überstand D1U mittels Bildverarbeitung aus Aufnahmen der Kamera 36 (siehe Fig. 1) auf die Setztiefe D1S zu schließen. Der Programmcode 32 ist ferner eingerichtet, die ermittelte Setztiefe D1S mit einer Mindest-Setztiefe **D1SS** zu vergleichen und zu prüfen, ob die Mindestsetztiefe D1SS mindestens erreicht wird. Im Beispiel gemäß Fig. 2 ist diese Bedingung erfüllt, daher kann der Programmcode 32 bei Ausführung mithilfe der Ausgabeeinheit 28 wiederum ein positives Prüfsignal 43 (siehe Fig. 1) ausgeben. Anderenfalls würde er die Ausgabe eines negativen Prüfsignals, beispielsweise eines Fehlersignals, auslösen, um dem Benutzer einen nicht ordnungsgemäßen Sitz des ersten Ankers 16 zu signalisieren.

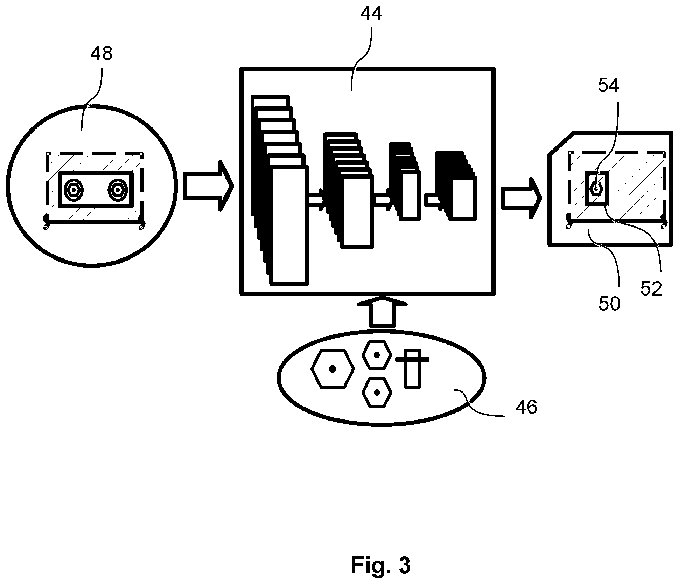

**Fig. 3** zeigt schematisch einen Maschinenlerner **44** sowie beispielhaft mögliche Trainingsdaten **46** zum Training des Maschinenlerners 44, mögliche Eingabedaten **48** zur Durchführung wenigstens einer der Bildverarbeitungen sowie ein Beispiel möglicher Ausgabedaten **50** des Maschinenlerners 44.

Der Maschinenlerner 44 kann wenigstens ein Konvolutions-basiertes neuronales Netzwerk, beispielsweise ein sogenanntes "Convolutional Neural Network", im Folgenden als CNN bezeichnet, mit mehreren, beispielsweise 4 oder 5, Verarbeitungsschichten, aufweisen. Das neuronale Netzwerk kann eingerichtet sein, als Trainingsdaten neben Bilddaten auch Regeldatensätze zu berücksichtigen.

Der Maschinenlerner 44 kann trainiert sein, um Aufnahmen von Baustellenobjekten semantisch zu segmentieren. Die semantische Segmentation kann eine Zuordnung eines Begrenzungsrahmens und / oder eines Referenzpunktes zu einem erkannten Objekt mitumfassen.

Insbesondere kann der Maschinenlerner 44 zur Identifikation von Baustellenobjekten, beispielsweise Betonelementen, Zwischenobjekten, beispielsweise Grundplatten, Unterlegscheiben und / oder verschiedenen Typen von Ankern, trainiert sein.

Beispielsweise können je Typ eines Ankers 50 bis 150 verschiedene mit Anmerkungen versehene Ansichten, insbesondere bei unterschiedlichen Licht- und / oder Kontrastverhältnissen und aus unterschiedlichen Perspektiven, vorzugsweise auch Teilansichten des Ankers und / oder Ansichten von oben oder von schräg oben auf einen Kopf oder ein freies Ende des Ankers umfassend, als Basis für die Trainingsdaten vorgesehen sein. Zur weiteren Verbesserung der Erkennungsraten können die Trainingsdaten durch Bildrotationen, Helligkeits- und / oder Kontrastmodifikationen erweitert werden.

Analog können auch für die weiteren Objekte oder Objektklassen, die zu identifizieren sind, Trainingsdaten zusammengestellt und gegebenenfalls erweitert werden.

Der Maschinenlerner 44 kann zudem trainiert sein, auch andere Alltagsgegenstände sowie auf Baustellen typischerweise vorkommende Gegenstände, die jedoch nicht mit den zu erkennenden Objekten in Verbindung stehen können, beispielsweise Werkzeuge oder Werkzeugmaschinen, als aus der weiteren Bildverarbeitung auszunehmende Gegenstände zu identifizieren. Hierzu können auch allgemeine Bilddatenbanken für Alltagsgegenstände für ein derart ergänzendes Training verwendet werden.

Das Training des Maschinenlerners 44 kann durch überwachtes Lernen erfolgen.

In den spezifischen Konstellationen, wie sie zu untersuchende Baustellensituationen 10 erwarten lassen, bestehen ferner bestimmte Regeln.

Beispielsweise kann vorausgesetzt werden, dass die erste Unterlegscheibe 20 zwischen dem Kopf des ersten Ankers 16 und der Grundplatte 14 oder dem Baustellenobjekt 12 angeordnet ist. Es kann beispielsweise ausgeschlossen werden, dass sich die Unterlegscheibe 20 außerhalb des ersten Ankers 16 befindet. Auch kann davon ausgegangen werden, dass sich die Grundplatte 14 zwischen dem Baustellenobjekt 12 und dem Kopf des ersten Ankers 16 angeordnet ist, wohingegen sich das Baustellenobjekt 12 nicht zwischen der Grundplatte 14 und dem Kopf des ersten Ankers 16 befinden kann.

Eine weitere Regel ergibt sich, wenn von dem Benutzer Eingabepositionen zu einem spezifischen Baustellenobjekt abgefragt werden. Werden vom Benutzer beispielsweise jeweils wenigstens drei Eingabepositionen abgefragt, die sich jeweils auf ein grundsätzlich ebenes Objekt, beispielsweise das Baustellenobjekt 12 oder die Grundplatte 14, beziehen, so ergeben sich weitere Regeln dadurch, dass die zu den Eingabepositionen gehörigen Positionen sich auf demselben Objekt befinden müssen, dass das Objekt zum jeweils abgefragten Objekt gehören muss und - bei Vorliegen von Tiefeninformationen - dass das abgefragte Objekt in der durch die Eingabepositionen aufgespannten Ebene liegen muss.

Die Trainingsdaten 46 können daher auch solche Regeln umfassen. Ferner kann der Maschinenlerner 44 zur Berücksichtigung solcher Regeln eingerichtet sein.

Nach erfolgtem Training kann der Maschinenlerner 44 als Eingabedaten 48 wenigstens eine Aufnahme, vorzugsweise mehrere Aufnahmen, der Kamera 36 erhalten. Die sich aus der Verarbeitung im Maschinenlerner 44 ergebenden Ausgabedaten 50 können dann Angaben zu identifizierten Objekten und / oder Begrenzungsrahmen **52** und / oder Referenzpunkten **54** zu den identifizierten Objekten umfassen. Aus Vereinfachungsgründen sind in Fig. 3 nur ein Begrenzungsrahmen 52 und ein Referenzpunkt 54 mit einem Bezugszeichen versehen.

Der Programmcode 32 kann dann eingerichtet sein, nach einer Identifikation des ersten Ankers 16 und des Randes 24 des Baustellenobjekts 12 sowie der zugehörigen Referenzpunkte 54 die für die jeweilige Prüfung erforderlichen Abstände, beispielsweise den Randabstand D1R (siehe Fig. 1), zu berechnen und mit dem zugeordneten Sollabstand D1RS (siehe Fig. 1) zu vergleichen. Je nach Ausgang des Vergleichs kann dann der Programmcode 32 ein Signal im Speicher 30 ablegen und / oder über die Ausgabeeinheit 28 ausgeben.

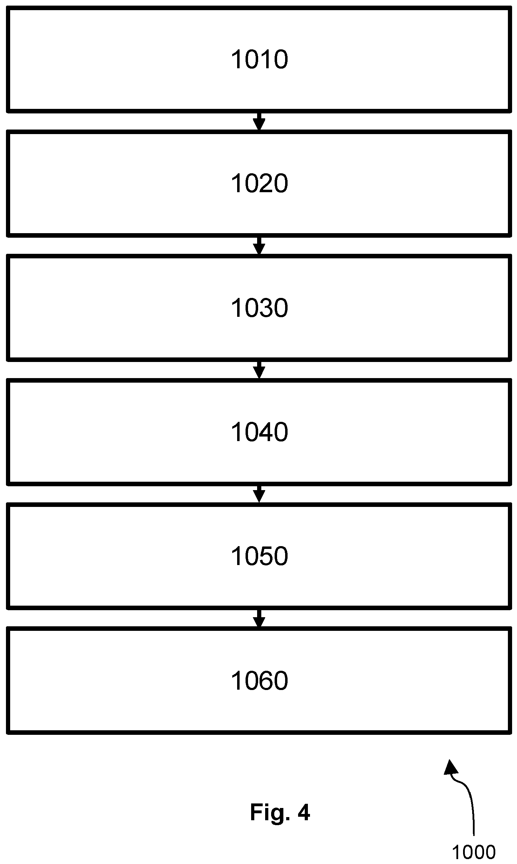

**Fig. 4** zeigt ein Verfahren **1000,** das durch den Programmcode 32 in Verbindung mit den weiteren Elementen des Rechnersystems 26 realisiert werden kann. Insbesondere kann der Programmcode 32 zur Ausführung des Verfahrens 1000 eingerichtet sein.

Das Verfahren 1000 wird nachfolgend unter Verwendung der vorangehend eingeführten Bezugszeichen der Elemente des Rechnersystems 26 sowie der Baustellensituation 10 näher erläutert. Bei Varianten des Verfahrens 1000 können ein oder mehrere der nachfolgend beschriebenen Phasen vereinfacht oder weggelassen sein.

Es wird vorausgesetzt, dass der Maschinenlerner 44 bereits trainiert ist.

In einer Typidentifizierungsphase **1010** werden Typen von zu prüfenden Ankern ermittelt. Dazu können beispielsweise zugehörige Datenmatrixcodes von Verpackungen der betreffenden Ankertypen mit Hilfe der Kamera gescannt werden. Von den Ankern zu erfüllende Mindestanforderungen, beispielsweise der Sollabstand D1RS des ersten Ankers 15 zum Rand 24, werden von einem entfernten Rechnersystem, insbesondere einem geeignet befüllten Datenbanksystem, in den Speicher 30 mit Hilfe des Kommunikationsmoduls 31 geladen.

In einer Orientierungsphase **1020** nimmt die Kamera Aufnahmen in Form von Bewegtbildern des Baustellenobjekts 12 auf. Aus den darin enthaltenen Bewegungsinformationen leitet der Programmcode 32 eine Vordergrund- / Hintergrundunterscheidung ab. Insbesondere wird eine Referenzebene einschließlich eines zur Referenzebene gehörigen Ursprungspunktes als Bezugsebene, auf die dreidimensionale Positionen nachfolgend identifizierter Objekte bezogen werden, ermittelt bzw. festgelegt.

In einer Untergrunderkennungsphase **1030** wird eine der Aufnahmen auf der Ausgabeeinheit 28 dargestellt. Von einem Benutzer der Rechnereinheit 26 werden wenigstens drei Eingabepositionen 42 abgefragt, die sich auf dem Baustellenobjekt 12 befinden und damit das Baustellenobjekt 12 charakterisieren sollen. Unter Verwendung dieser Eingabepositionen 42 ermittelt der Maschinenlerner 44 das Vorhandensein des Baustellenobjekt 12 und insbesondere die Lage seines Randes 24.

In einer Erkennungsphase **1040** werden mit Hilfe des Maschinenlerners 44 und unter Verwendung der Eingabepositionen 42 weitere Objekte, insbesondere die Grundplatte 14 und gesetzte Anker, insbesondere der erste Anker 16 und der zweite Anker 18, identifiziert sowie zugehörige Bezugsrahmen 52 und Referenzpunkte 54 bestimmt. Die Positionen und Orientierungen der Bezugsrahmen 52 und der Referenzpunkte 54 werden dabei dreidimensional mit Bezug auf die in der Orientierungsphase 1020 ermittelte Referenzebene und deren Ursprungspunkt ermittelt.

In einer Prüfungsphase **1050** werden unter Verwendung der Referenzpunkte 54, und gegebenenfalls der Bezugsrahmen 52, Abstände der identifizierten Anker 16, 18 zueinander sowie vom Rand 24, darunter beispielsweise der Randabstand D1R des ersten Ankers 16 zum Rand 24, berechnet. Anschließend werden diese Abstände mit im Speicher 30 vorhandenen Mindestanforderungen verglichen. Beispielsweise wird der Randabstand D1R mit dem Sollabstand D1RS verglichen.

In einer Ergebnisphase **1060** werden dann je nach Ausgang des Vergleichs auf der Ausgabeeinheit 28 positive oder negative Prüfsignale dargestellt.

Denkbar ist, dass die positiven oder negativen Prüfsignale ergänzend in einem Dokumentationssystem wiederabrufbar gespeichert werden, sodass sie beispielsweise für spätere Prüfzwecke erneut zur Verfügung gestellt werden können. Das Dokumentationssystem kann sich auf einem entfernten Rechnersystem befinden und beispielsweise über das Kommunikationsmodul 31 erreichbar sein.

Denkbar ist ferner, dass im Falle eines negativen Prüfsignals eine Korrektur des Sitzes des betreffenden Ankers erfolgt.

Diese Variante des Verfahrens 1000 ermöglicht somit eine Qualitätskontrolle beispielsweise des bereits gesetzten ersten Ankers 16.

Eine Variante des Verfahrens 1000 kann auch eine Vorabprüfung einer Ankerposition ermöglichen. Soweit im Folgenden nicht anders beschrieben, kann auch diese Variante ein oder mehrere der vorangehend beschriebenen Phasen des Verfahrens 1000 umfassen.

Die zu prüfende Ankerposition kann auf der Grundplatte 14 mit einer Markierung definiert sein. Denkbar ist auch, dass die zu prüfende Ankerposition einer Position eines Bohrlochs oder dergleichen entspricht.

Zu prüfen ist somit, ob an der zu prüfenden Ankerposition ein Anker eines bestimmten Typs ordnungsgemäß setzbar ist, insbesondere, ob an den Typ des Ankers zu stellende Mindestanforderungen erfüllt sind, wenn der Anker an der zu prüfenden Ankerposition gesetzt würde.

Vorzugsweise wird dazu der Typ des an der zu prüfenden Ankerposition zu setzenden Ankers während der Typidentifikationsphase 1010 durch Scannen eines Datenmatrixcodes oder eines Barcodes und / oder durch manuelle Eingabe bestimmt.

Die Erkennungsphase 1040 ist bei dieser Variante dahingehend modifiziert, dass anstelle des ersten Ankers 16 bzw. anstelle eines gesetzten Ankers die zu prüfende Ankerposition mitsamt einem ihr zugeordneten Referenzpunkt 54 und / oder einem Bezugsrahmen 52 sowie der zugehörigen Positionen ermittelt werden. Dazu kann beispielsweise eine Erkennung der Markierung bzw. des Bohrlochs erfolgen.

Die Prüfungsphase 1050 ist bei dieser Variante dahingehend modifiziert, dass des ersten Ankers 16 bzw. anstelle identifizierter Anker die entsprechende zu prüfende Ankerposition tritt. So kann beispielsweise der Randabstand D1R der zu prüfenden Ankerposition zum Rand 24 berechnet werden.

In der Ergebnisphase 1060 ist denkbar, dass der Ausgang des Vergleichs wiederum auf der Ausgabeeinheit 28 mittels entsprechender Prüfsignale dargestellt wird. Denkbar ist alternativ oder ergänzend auch, dass abhängig vom Ausgang des Vergleichs ein Setzen des ersten Ankers 16 ermöglicht beziehungsweise blockiert wird. Beispielsweise kann bei einem negativen Ausgang eine Handwerkzeugmaschine, mit der an der Markierung ein Bohrloch erstellt werden sollte, gestoppt und / oder gesperrt werden. Alternativ oder ergänzend kann in diesem Fall ein Setzgerät zum Setzen des ersten Ankers 16 gestoppt und / oder gesperrt werden.

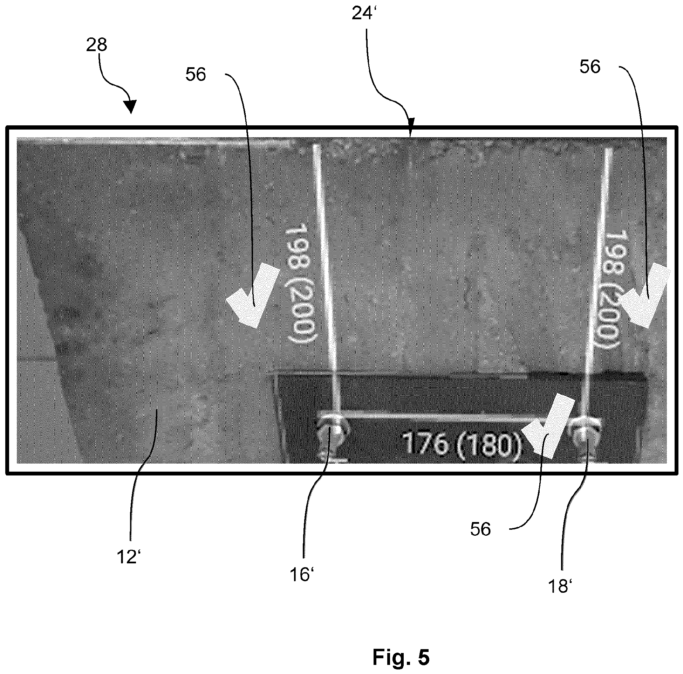

**Fig. 5** zeigt einen Ausschnitt einer solchen Ausgabe auf der Ausgabeeinheit 28 auf Basis einer Ausgabe eines Demonstratorsystems des Rechnersystems 26.

Insbesondere sind Abbildungen **12'**, **16'**, **18'** und **24'** des Baustellenobjekts 12, des ersten Ankers 16, des zweiten Ankers 18 sowie des Randes 24 zu erkennen.

Ermittelte Abstände (in Millimetern) sind als Zahlenwerte ebenfalls erkennbar. Bei dem zur Erstellung der Ausgabe verwendeten Demonstratorsystem waren die tatsächlichen Abstände ebenfalls bekannt, um resultierende Messfehler prüfen zu können. Die tatsächlichen Abstände sind in Fig. 5 als Zahlenwerte in Klammern, ebenfalls in Millimetern, angegeben.

Somit konnten Abstände mit Messfehlern von unter 0,5 Zentimetern, insbesondere von 2 mm, entsprechend der Differenz zwischen 200 mm und 198 mm, sowie von 4 mm, entsprechend der Differenz zwischen 180 mm und 176 mm, ermittelt werden.

Abgebildet sind ferner zu den Abständen gehörige Prüfsignale **56**, die in diesem Falle jeweils positiven Prüfsignalen entsprechen. Die Prüfsignale 56 indizieren somit, dass die Anker 16 und 18 ordnungsgemäß gesetzt sind.

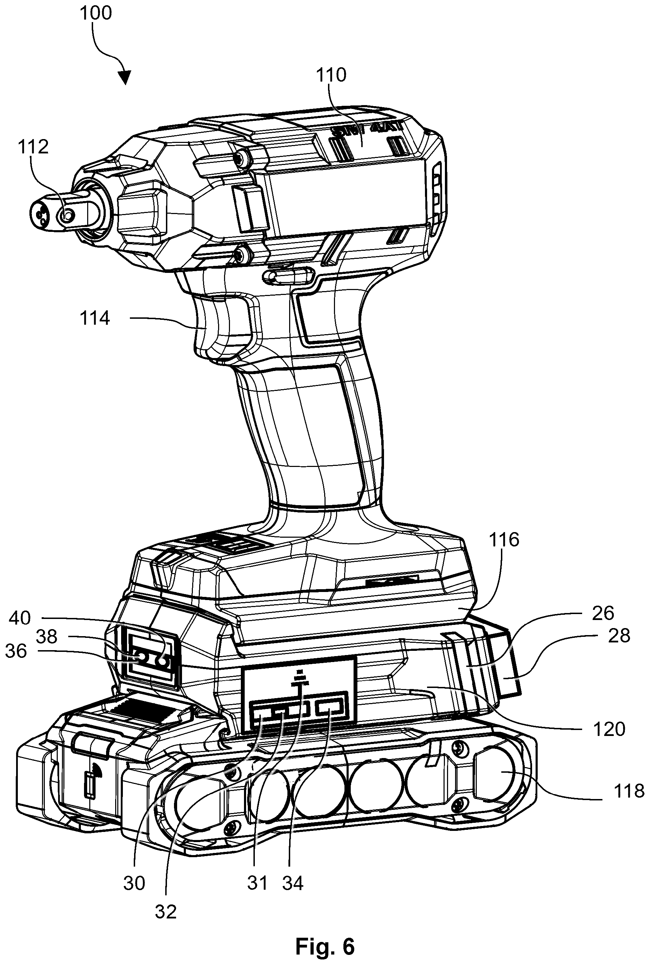

**Fig. 6** zeigt eine Handwerkzeugmaschine **100.** Die Handwerkzeugmaschine 100 ist als Schraubensetzgerät, insbesondere als Akku-betriebener Schlagschrauber, ausgebildet.

Sie weist einen Maschinenkörper **110** mit einer Werkzeugaufnahme **112** zur Aufnahme eines Schraubwerkzeugs auf. Die Handwerkzeugmaschine 100 ist eingerichtet, bei Betätigen eines Betätigungstasters **114** die Werkzeugaufnahme 112 drehend und / oder schlagend anzutreiben. Dazu weist die Handwerkzeugmaschine 100 einen im Maschinenkörper 110 angeordneten Motor auf.

An einer Unterseite des Maschinenkörpers 110 ist eine Befestigungsstelle **116** ausgebildet. Die Befestigungsstelle 116 ermöglicht eine lösbare Befestigung eines Akkumulators **118** am Maschinenkörper 110. Die Befestigungsstelle 116 kann einen Rastmechanismus (in Fig. 6 nicht darstellbar) aufweisen.

Die Befestigungsstelle 116 weist ferner eine elektrische Schnittstelle (in Fig. 6 nicht darstellbar) auf, über die elektrische Energie zum Motor übertragbar ist. Zudem kann die Befestigungsstelle, insbesondere ihre elektrische Schnittstelle, 116 zur Datenübertragung eingerichtet sein.

Im in Fig. 6 gezeigten Anwendungsfall ist an der Befestigungsstelle 116 ein Rechnersystem 26 angeordnet.

Das Rechnersystem 26 kann im Aufbau sowie hinsichtlich seiner Funktionalitäten den vorangehend beschriebenen Rechnersystemen 26 entsprechen, soweit nachfolgend nichts anderes beschrieben ist.

Insbesondere ist das Rechnersystem 26 zur Ausführung wenigstens einer der Varianten des Verfahrens 1000 (siehe Fig. **4**) eingerichtet.

Dazu weist es wiederum den Speicher 30 auf, in dem der Programmcode 32 abgelegt ist. Der Programmcode 32 kann auf dem Mikroprozessor 34 des Rechnersystems 26 ausgeführt werden.

Das Rechnersystem 26 weist unter anderem auch das Kommunikationsmodul 31 auf, das wiederum zum Aufbau einer Datenverbindung zu einem entfernten Rechnersystem eingerichtet ist.

In Fig. 6 sind aus Darstellungsgründen die Elemente 30, 31, 32, 34 lediglich stark schematisiert dargestellt, befinden sich aber vorzugsweise innerhalb eines Gehäuses **120** des Rechnersystems 26.

Ferner weist das Rechnersystem 26 wiederum die Kamera 36 mit den zwei Aufnahmeeinheiten 38, 40 auf.

Zur Ein- und Ausgabe weist das Rechnersystem 26 ferner an einer Rückseite eine einen, insbesondere Handschuh-bedienbaren, Touchscreen umfassende Ausgabeeinheit 28 auf. Über die Ausgabeeinheit 28 können somit auch manuelle Eingaben, beispielsweise eines Ankertyps, erfolgen.

Eine Besonderheit dieses Rechnersystem 26 ist, das es oberseitig eine der Befestigungsstelle 116 komplementär ausgebildete Passform aufweist, sodass es auf die Befestigungsstelle 116, wie in Fig. 6 abgebildet, aufgeschoben werden kann.

Unterseitig weist es eine der Befestigungsstelle 116 entsprechende Form auf, sodass der Akkumulator 118 an dieser Unterseite lösbar befestigbar und gemäß der Darstellung in Figur 6 auch lösbar befestigt ist.

Insoweit bildet das Rechnersystem 26 in dieser Ausführungsform ein Zwischenmodul zur Anordnung zwischen dem Akkumulator 118 und dem Maschinenkörper 110. Vorzugsweise ist die elektrische Schnittstelle der Befestigungsstelle 116 von der Unterseite des Rechnersystems 26 zu seiner Oberseite durchgeschleift.

Denkbar ist, dass diese Ausführungsform des Rechnersystems 26 auch unabhängig vom Maschinenkörper 110, beispielsweise zusammen mit dem Akkumulator 118, verwendbar ist.

Denkbar ist auch, dass wenigstens eines der Elemente 30, 31, 32 oder 34 außerhalb des Gehäuses 120, insbesondere als Teil des Maschinenkörpers 110, angeordnet und / oder ausgebildet ist. Beispielsweise ist denkbar, dass der Mikroprozessor 34 als von dem Rechnersystem 26 als auch dem Maschinenkörper 110 gemeinsam genutzter oder zumindest gemeinsam nutzbarer Mikroprozessor ausgebildet ist.

Das Rechnersystem 26 ist somit auch in dieser Ausführungsform zur Unterstützung des Setzens von Ankern in ein Baustellenobjekt, insbesondere zum Bohren eines Bohrlochs an einer bestimmten Ankerposition, und / oder zur Qualitätskontrolle eines in ein Baustellenobjekt gesetzten Ankers eingerichtet.

## Patentansprüche

1. **Rechnersystem** (26) zur Positionsbestimmung einer Ankerposition relativ zu einem Baustellenobjekt (12), beispielsweise einem Betonelement, umfassend
- wenigstens eine Kamera (36),
- wenigstens eine Ausgabeeinheit (28),
- wenigstens einen Speicher (30), und
- wenigstens einen Mikroprozessor (34), wobei in dem Speicher (30) Programmcode (32) zur Ausführung auf dem Mikroprozessor (34) abgelegt ist, wobei der Programmcode (32) eingerichtet ist,
- wenigstens einen Typ eines ersten Ankers (16), beispielsweise ein Schraubanker, ein Bolzenanker, ein Schlaganker oder ein Nagel, zu identifizieren, und
- mit Hilfe der Kamera (36) wenigstens einen Abstand (D1R) zwischen einer ersten Ankerposition des ersten Ankers (16) auf einem Baustellenobjekt (12) und / oder für den ersten Anker (16) und einer Position eines zweiten Ankers (18) auf dem Baustellenobjekt (12), für einen zweiten Anker (18) auf dem Baustellenobjekts (12) und / oder zu einem Rand (24) des Baustellenobjekts (12) zu bestimmen, und
- mit Hilfe der Ausgabeeinheit (28) ein Signal (56) auszugeben und / oder im Speicher (30) ein Signal (56) abzuspeichern, wobei das Signal (56) indikativ dafür ist, ob der Abstand (D1R) einem definierten Sollabstand (D1RS) mindestens entspricht.

2. Rechnersystem nach dem vorhergehenden Anspruch, **dadurch gekennzeichnet, dass** der Sollabstand (D1RS) vom Typ des ersten Ankers (16) abhängt.

3. Rechnersystem nach einem der vorhergehenden Ansprüche, **dadurch gekennzeichnet, dass** das Rechnersystem (26) ein Kommunikationsmodul (31) aufweist zur Kommunikation mit einem entfernten Rechnersystem, wobei der Programmcode (32) eingerichtet ist, den Sollabstand (D1RS) von dem entfernten Rechnersystem über das Kommunikationsmodul (31) abzurufen.

4. Rechnersystem nach einem der vorhergehenden Ansprüche, **dadurch gekennzeichnet, dass** der Programmcode (32) eingerichtet ist, wenigstens eine Materialeigenschaft des Baustellenobjekts (12) zu bestimmen.

5. Rechnersystem nach einem der vorhergehenden Ansprüche, **dadurch gekennzeichnet, dass** der Programmcode (32) eingerichtet ist, wenigstens ein am ersten Anker (16) und am Baustellenobjekt (12) anzuordnendes und / oder angeordnetes Zwischenobjekt, beispielsweise eine Grundplatte (14) und / oder eine erste Unterlegscheibe (20), zu identifizieren.

6. Rechnersystem nach einem der vorhergehenden Ansprüche, **dadurch gekennzeichnet, dass** der Programmcode (32) eingerichtet ist, mit Hilfe der Kamera (36) eine Setztiefe (D1S) des ersten Ankers (16) im Baustellenobjekt (12) zu bestimmen.

7. Rechnersystem nach einem der vorhergehenden Ansprüche, **dadurch gekennzeichnet, dass** der Programmcode (32) eingerichtet ist, den Abstand (D1R) zu bestimmen, wenn der erste Anker (16) bereits gesetzt ist.

8. Rechnersystem nach einem der vorhergehenden Ansprüche, **dadurch gekennzeichnet, dass** der Programmcode (32) eingerichtet ist, den Abstand (D1R) ausgehend von der ersten Ankerposition zu bestimmen, wenn der erste Anker (16) nicht gesetzt ist.

9. Rechnersystem nach einem der vorhergehenden Ansprüche, **dadurch gekennzeichnet, dass** der Programmcode (32) eingerichtet ist, einen Oberflächenverlauf des Baustellenobjekts (12) und / oder des Zwischenobjekts unter Verwendung wenigstens einer das Baustellenobjekt (12) und / oder das Zwischenobjekt charakterisierenden Eingabe eines Benutzers des Rechnersystems (26) zu bestimmen.

10. **Handwerkzeugmaschine** (100), insbesondere Setzgerät oder Bohrmaschine, mit einem Rechnersystem (26) nach einem der vorhergehenden Ansprüche.

11. Handwerkzeugmaschine nach dem vorhergehenden Anspruch, **dadurch gekennzeichnet, dass** das Rechnersystem (26) an einer Befestigungsstelle (114) der Handwerkzeugmaschine (100) lösbar angeordnet ist.

12. **Verfahren** (1000) zur Unterstützung des Setzens eines ersten Ankers (16) in ein Baustellenobjekt (12) und / oder zur Qualitätskontrolle eines in ein Baustellenobjekt (12) gesetzten ersten Ankers (16), wobei mit einem Rechnersystem (26) nach einem der vorhergehenden Ansprüche 1 bis 9 mit Hilfe einer Kamera (36) des Rechnersystems (26) wenigstens ein Abstand (D1R) zwischen einer ersten Ankerposition des ersten Ankers (16) auf einem Baustellenobjekt (12) und / oder für den ersten Anker (16) und einer Position eines zweiten Ankers (18) auf dem Baustellenobjekt (12), für einen zweiten Anker (18) auf dem Baustellenobjekts (12) und / oder zu einem Rand (24) des Baustellenobjekts (12) bestimmt wird, und wobei der bestimmte Abstand (D1R) mit einem Sollabstand (D1RS) verglichen wird.
